# EUROPEAN PATENT APPLICATION

(11) **EP 4 796 344 A1**
(43) Date of publication of application: **26.08.2026**
(21) Application number: 25159919.7
(22) Date of filing: 25.02.2025
(51) Int. Cl.: B60B 33/00

(54) **SELF-ALIGNING WHEEL FOR A LUGGAGE CASE**

(71) Applicant: Samsonite IP Holdings S.à r.l., 1931 Luxembourg (LU)
(72) Inventor: DE VOS, Wim, 9750 Zingem (BE)
(74) Representative: Kilburn & Strode LLP

(57) **Abstract**

A luggage wheel assembly (200, 300, 400) includes: a strut (218); and a wheel (202) defining a wheel plane (260); a first axle (214) coupled to the wheel (202), wherein the wheel (202) rotates within the wheel plane (260) and pivots with respect to the strut (218).

## Description

### TECHNICAL FIELD

This relates to luggage articles with wheels, and in particular a self-aligning luggage case wheel assembly and luggage case with such wheels.

### BACKGROUND

Luggage cases typically include wheels and wheel assemblies mounted on and to the cases. Many luggage cases, including hard-side cases include features that may cause flexion of the outer shell of the case and cause one or more wheels to lose contact with a support surface (e.g., ground, floor, etc.). This may manifest while moving the luggage case along a support surface. For example, many hard side luggage cases include plastic shells that are tough (e.g., impact resistant) but flexible. In such luggage cases, flexion of the case (e.g., due to the load of a user's belongings therein), uneven support surfaces, etc., can cause the wheels to lose contact with the support surface. Additionally, or alternately, luggage cases may include configurable features (e.g., expandable gussets or pockets) that further increase the flexibility of the shell. For example, this may occur when a gusset is expanded to increase the size of the internal compartment of the luggage case. The expansion may further exacerbate the problem of lost or modified contact with the support surface.

Such loss or change of contact can make a luggage case difficult to move and can even cause damage, such as to a wheel that remains in contact with the support surface and then bears an increased load due to other wheels having no or reduced contact with the support surface. Further in general use luggage cases may be wheeled over uneven or rough surfaces causing the wheels of the case to deflect and not wheel in the intended direction.

Improved devices and systems are desired that can increase ground contact of wheels in a variety of situations and with a variety of shell types and/or configurations.

### SUMMARY

In one embodiment, a luggage wheel assembly includes, a strut, and a wheel defining a wheel plane; a first axle coupled to the wheel and coupled to the strut, wherein the wheel rotates within the wheel plane and pivots with respect to the strut. Such luggage wheel assemblies provide for increased wheel contact with a support surface such as the ground as a luggage article is wheeled over a rough surface or obstacles. Additionally, or alternately such luggage wheel assemblies prevent or reduce force (and resulting damage) being transferred to a housing or other structure of the wheel assembly and/or luggage article when encountering an obstacle or rough surface. Such embodiments also help maintain wheel contact with a support surface when a gusset or expansion panel in the luggage article is expanded.

Optionally, in some embodiments, the luggage wheel assembly includes an at least partially spherical ball joint coupled to the strut and the first axle and the wheel pivots with respect to the strut via the at least partially spherical ball joint. Such embodiments beneficially provide the ability of the wheel to move (e.g., around an obstacle or over rough terrain) with at least two degrees of freedom (e.g., vertical movement of the wheel plane relative to the strut, horizontal movement of the wheel plane relative to the strut, or both).

Optionally, in some embodiments, the luggage wheel assembly further includes a second axle coupled to the strut, wherein the first axle is pivotable with respect to the second axle. Such embodiments further beneficially provide an additional degree of freedom for the wheel plane to move around obstacles or over rough ground.

Optionally, in some embodiments, the wheel is offset from, and pivotable with respect to, the strut. Such embodiments further beneficially provide the ability of the wheels to track with a direction of motion of the luggage case.

Optionally, in some embodiments, the first axle includes a portion of the at least partially spherical ball. Such embodiments beneficially enable the construction of the wheel assemblies with fewer parts compared to a separate first axle and at least partially spherical ball.

Optionally, in some embodiments, the wheel plane pivots in a first plane, a second plane, or a combination of the first and second planes. Such embodiments beneficially provide the ability of the wheel plane to move around a wide variety of obstacles.

Optionally, in some embodiments, the wheel plane pivots at an angle with respect to an axis of the strut. Such embodiments beneficially enable a wheel of the assembly to pivot over or around an obstacle in one direction.

Optionally, in some embodiments, the wheel plane pivots with respect to a second plane defined by an axis of the strut. Such embodiments beneficially enable a wheel of the assembly to pivot over or around an obstacle in one or more directions.

Optionally, in some embodiments, the second plane is substantially normal to the axis of the strut. Such embodiments beneficially enable a wheel of the assembly to pivot over or around an obstacle in one direction.

Optionally, in some embodiments, the wheel is cantilevered relative to the strut. Such embodiments can provide simplified manufacturing, reduced parts count, and/or more maneuverability compared to other wheel assemblies.

Optionally, in some embodiments, the luggage wheel assembly further includes a collar extending radially from the first axle that limits pivoting of the wheel plane. Such embodiments beneficially keep the wheel plane within a desired envelope when pivoting around obstacles or rough surfaces.

Optionally, in some embodiments, the pivoting of the wheel is limited to prevent a hub of the wheel from contacting the strut. Such embodiments beneficially prevent or reduce damage to the strut or wheel from rubbing caused by the wheel.

Optionally, in some embodiments, the luggage wheel assembly further includes a second wheel, wherein the first wheel and the second wheel are mounted to the first axle to rotate about axis defined by the first axle. Such embodiments provide additional stability of the luggage case as it is moved over a support surface, compared to other wheel assemblies.

Optionally, in some embodiments, the first wheel and the second wheel are symmetrically or asymmetrically spaced from one another with respect to the at least partially spherical ball joint. Such embodiments can further increase stability of the luggage case as it is moved over a support surface, compared to other wheel assemblies.

Optionally, in some embodiments, the wheel assembly includes a spinner wheel assembly. Such embodiments further beneficially provide the ability of the wheels to track with a direction of motion of the luggage case.

Optionally, in some embodiments, the at least partially spherical ball joint includes: a partial sphere formed with the first axle, and a bearing including a partially spherical recess, wherein the partial sphere is receivable in the recess. Such embodiments beneficially reduce friction within the least partially spherical ball joint compared to other wheel assemblies.

Optionally, in some embodiments, the bearing includes a plurality of portions that together form the recess. Such embodiments beneficially provide ease of manufacturing of the wheel assembly by enabling the at least partially spherical ball to be received between the plurality of portions before being coupled to the strut.

Optionally, in some embodiments, the strut is molded onto the bearing. Such embodiments beneficially provide a secure coupling of the at least partially spherical ball joint to the strut.

Optionally, in some embodiments, the wheel pivots in an inclusive range between 5° and 10°. Such embodiments beneficially provide for the wheel plane to pivot to avoid a wide variety of obstacles.

Optionally, in some embodiments, the strut includes a fork, and the wheel is coupled to the fork via the first axle. Such embodiments beneficially provide ease of assembly of the wheel assembly to a luggage case.

Optionally, in some embodiments, the luggage wheel assembly further includes a housing that mounts to a luggage case, wherein the fork is mounted to the housing. Such embodiments beneficially provide a secure mount between the wheel assembly and the luggage case.

In one embodiment, a luggage wheel assembly includes a first axle, a second axle disposed at an angle with respect to the first axle, an at least partially spherical ball joint coupled to the first axle and the second axle, and a wheel, wherein the wheel is laterally offset from, and rotatable about, the second axle in a circumferential direction, and pivotable at a first angle with respect to a longitudinal axis of the second axle, and pivotable at a second angle about a plane normal to the longitudinal axis of the second axle, and rotatable in a plane normal to a longitudinal axis of the first axle.

Optionally, in some embodiments, the first angle is a vertical angle. Such embodiments beneficially provide for the wheel plane to pivot over obstacles or rough surfaces.

Optionally, in some embodiments, the second angle is a horizontal angle. Such embodiments beneficially provide for the wheel plane to pivot around obstacles or rough surfaces.

Optionally, in some embodiments, the first wheel is cantilevered with respect to the second axle. Such embodiments can provide simplified manufacturing, reduced parts count, and/or more maneuverability compared to other wheel assemblies.

Optionally, in some embodiments, the wheel is pivotable at the first angle and the second angle simultaneously. Such embodiments beneficially enable the wheel plane to pivot around or over complex obstacle or surface shapes.

Optionally, in some embodiments, the luggage wheel assembly further includes a collar extending radially from the first axle that limits pivoting of the wheel at least one of the first angle or the second angle. Such embodiments beneficially keep the wheel plane within a desired envelope when pivoting around obstacles or rough surfaces.

Optionally, in some embodiments, the collar engages a portion of the strut to prevent the wheel from interfering with the strut. Such embodiments beneficially prevent or reduce damage to the strut or wheel from rubbing caused by the wheel.

Optionally, in some embodiments, the luggage wheel assembly further includes a second wheel, wherein the first wheel and the second wheel are coupled to and rotatable about the first axle. Such embodiments provide additional stability of the luggage case as it is moved over a support surface, compared to other wheel assemblies.

Optionally, in some embodiments, the first axle includes an at least partially spherical mount. Such embodiments beneficially enable the construction of the wheel assemblies with fewer parts compared to a separate first axle and at least partially spherical ball.

Optionally, in some embodiments, wherein the first wheel and the second wheel are symmetrically spaced from one another with respect to the at least partially spherical mount. Such embodiments can further increase stability of the luggage case as it is moved over a support surface, compared to other wheel assemblies.

Optionally, in some embodiments, the first wheel and the second wheel are asymmetrically spaced from one another with respect to the at least partially spherical mount. Such embodiments can further increase stability of the luggage case as it is moved over a support surface, compared to other wheel assemblies.

Optionally, in some embodiments, the wheel assembly includes a spinner wheel assembly. Such embodiments further beneficially provide the ability of the wheels to track with a direction of motion of the luggage case.

Optionally, in some embodiments, the at least partially spherical mount includes a partial sphere formed with the first axle, and a bearing including a partially spherical recess, wherein the partial sphere is receivable in the recess. Such embodiments beneficially reduce friction within the least partially spherical ball joint compared to other wheel assemblies.

Optionally, in some embodiments, a luggage case includes any of the preceding the luggage wheel assemblies. Such embodiments of luggage cases include one or more of the benefits of the preceding wheel assembly embodiments. For example, such luggage wheel assemblies provide for increased wheel contact with a support surface such as the ground as a luggage article is wheeled over a rough surface or obstacles.

In one embodiment a luggage case includes a first shell, a second shell hingedly coupled to the first shell, and a tow handle coupled to at least one of the first shell or the second shell. Such embodiments of luggage cases enable the luggage case to be towed over a rough surface or obstacles with a user's belongings in a compartment formed by the shells when closed.

Optionally, in some embodiments, the luggage case further includes two of any of the preceding wheel assemblies. Such embodiments of luggage cases enable the luggage case to be towed over a rough surface or obstacles with a user's belongings in a compartment formed by the shells when closed.

Optionally, in some embodiments, the luggage case further includes four of any of the preceding wheel assemblies. Such embodiments of luggage cases enable the luggage case to be rolled (e.g., with four wheel contact) or towed (e.g., with two-wheel contact) over a rough surface or obstacles with a user's belongings in a compartment formed by the shells when closed.

### BRIEF DESCRIPTION OF THE SEVERAL VIEWS OF THE DRAWINGS

FIG. 1 is a perspective view of an embodiment of a luggage article.
FIG. 2A is a perspective view of an embodiment of a wheel assembly suitable for use with the luggage article of FIG. 1.
FIG. 2B is a cross-section view of the wheel assembly of FIG. 2A taken along line 2B-2B of FIG. 2A, in a non-pivoted configuration.
FIG. 2C is a partially exploded view of the wheel assembly of FIG. 2A.
FIG. 2D is a cross-section of the wheel assembly of FIG. 2A taken along line 2B-2B of FIG. 2A, in the configuration of FIG. 2G.
FIG. 2E is an elevation view of the wheel assembly of FIG. 2A with a wheel rotation axle in a first, pivoted configuration with respect to a spinner axle thereof.
FIG. 2F is a plan view of the wheel assembly of FIG. 2A in the configuration of FIG. 2E.
FIG. 2G is an elevation view of the wheel assembly of FIG. 2A with a wheel rotation axle in a second, pivoted configuration with respect to a spinner axle thereof.
FIG. 3 is a cross-section view of an embodiment of a wheel assembly including asymmetrically spaced wheels.
FIG. 4 is a cross-section view of an embodiment of a wheel assembly including one wheel.

### DETAILED DESCRIPTION

The improved luggage cases described herein may include one or more wheel assemblies mounted to a luggage case. Each wheel assembly includes mount with at least one wheel coupled thereto that defines a plane (a "wheel plane"), and the wheel can rotate (also referred to herein as "spin") within the wheel plane. In various embodiments, the wheel plane may also move in a first plane, a second plane, or a combination of the first and second planes. For example, the wheel plane may move by pivoting relative to the mount vertically, horizontally, and/or both horizontally and vertically. In many embodiments, each wheel assembly includes two wheels. The wheel assembly includes an at least partially spherical mount that enables the pivoting of the wheel plane with respect to the mount. For example, if the wheel encounters an obstacle such as a bump, depression, rock, rough ground, or other object that impedes its path, at least a portion of the wheel assembly, such as a wheel and/or an axle may move (e.g., pivot) horizontally, preventing or reducing force being transferred to a housing or other structure of the wheel assembly and/or suitcase. The wheel and/or axle may also move (e.g., pivot) vertically as the wheel clears the obstacle, which may be contemporaneous with or subsequent to the horizontal movement. Together both movements help reduce the forces on the luggage case and enable smoother movement of the wheel assemblies and luggage case over a support surface compared to existing wheel assemblies. In many embodiments with a double wheel, the wheels are substantially symmetrically spaced apart from the at least partially spherical mount. In some embodiments, the double wheels are asymmetrically spaced from the at least partially spherical mount. In embodiments including one wheel, the wheel may be cantilevered with respect to the at least partially spherical mount.

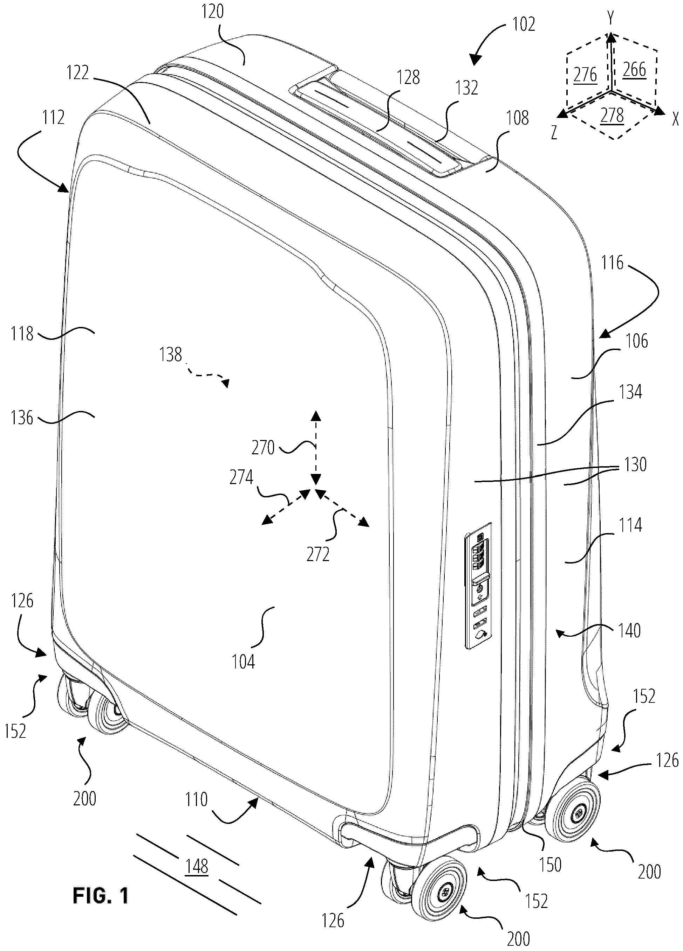

A wheel assembly includes a first axle and at least one wheel pivotable and rotatable about the first axle. In some examples, the wheel assembly includes a second axle disposed at an angle with respect to the first axle. Where there is a second axle, the at least one wheel may be rotatable about, or with, the second axle. The first axle may be pivotable with respect to the second axle. In many embodiments, the wheel is laterally offset from the second axle and is rotatable about the second axle in a circumferential direction. For example, a circle may be defined by the second (spinner) axle, whose radius is the distance between the spinner axle and the first axle on which the wheel is mounted. The first axle moves circumferentially about that circle. The wheel is pivotable at a first angle in a first plane (e.g., an xy plane) with respect to a longitudinal axis of the mount. The first plane and/or first angle may also be defined by one or more dimensions of the luggage case (see, e.g., FIG. 1 and accompanying description). The wheel is also pivotable at a second angle about a second plane defined by the longitudinal axis of the mount. The second plane and/or second angle may also be defined by one or more dimensions of the luggage case 102. The wheel is rotatable in a plane defined by the longitudinal axis of the first axle.

Turning to FIG. 1, the wheel assemblies herein are coupled to a shell of a luggage case 102. The luggage case 102 includes a first shell 120. The luggage case 102 and may include a second shell 120 pivotally or hingedly connected to the first shell 120 move between an open position and a closed position. Each shell 120, 122 may define a major wall 136. Each shell 120, 122 may include a peripheral wall 130. The peripheral wall 130 may define a peripheral rim 134. The major wall 136 and the peripheral wall 130 together may define an internal compartment 138. The wheel assemblies described herein may be suitable for use on many different types of luggage articles, including but not limited to hard-sided luggage cases, soft-sided luggage cases, and hybrid luggage cases.

FIG. 1 is an isometric view of a luggage case 102 in a closed configuration according to some examples of the present disclosure. A luggage case 102 may be formed from a plurality of walls (e.g., peripheral walls 130 and or major walls 136) or panels (e.g., a main panel 104, main panel 106, top panel 108, bottom panel 110, left side panel 112, right side panel 114, rear panel 116, and/or front panel 118) formed into two opposing half shells 120, 122 and defining, when the shells 120, 122 are in a closed configuration, an internal compartment 138 and storage volume in which to carry a user's belongings. As shown, the luggage case 102 includes opposing main panels 104 and 106 such as a front panel 118 and an opposing rear panel 116, opposing end panels such as a top panel 108 and an opposing bottom panel 110, and opposing side panels, such as a left side panel 112 and an opposing right side panel 114. These panels collectively define a pair of opposing shells 120, 122 that form the outer structure of the luggage case 102. The left side panel 112, right side panel 114, front panel 118 and rear panel 116 extend along the long dimension of the luggage case.

The luggage case 102 may define one or more major axes, such as between faces, along edges or corners of the luggage case 102. For example, the luggage case 102 may include a longitudinal axis 270 that runs between the top panel 108 and the bottom panel 110. The luggage case 102 may also include a transverse axis 272 that runs between the left side panel 112 and the right side panel 114. The luggage case 102 may also include a depth axis 274 that runs between the front panel 118 and the rear panel 116. In some embodiments, the longitudinal axis 270, the transverse axis 272, and/or the depth axis 274 are orthogonal to one another. In other examples, the axes 270, 272, and/or 274 are disposed at other angles with respect to one another than an orthogonal angle.

Any two of the longitudinal axis 270, transverse axis 272, and/or depth axis 274 may define a plane. For example, the longitudinal axis 270 and the transverse axis 272 may define a plane 266 or xy plane. The longitudinal axis 270 and the depth axis 274 may define a plane 276 or yz plane. The transverse axis 272 and the depth axis 274 may define a plane 278 or xz plane. Any of the planes 266, 276, and/or 278 may be orthogonal to one another. In other examples, the planes are disposed at other angles with respect to one another than an orthogonal angle.

As shown, a plurality of wheel assemblies 200, which may be caster-type or spinner wheel assemblies, may be coupled to at least the bottom panel 110, such as at the lower corner regions 126. When the luggage case 102 rests on a support surface 148 (such as a floor) by the engagement of the wheels 202 of the wheel assemblies 200, the bottom panel 110 is nearest the support surface, the top panel 108 is furthest from the support surface, and the front panel 118, rear panel 116, left side panel 112, and right side panel 114 extend upwardly from the bottom panel 110 to the top panel 108.

The luggage case 102 may also include one or more carry handles 128, typically one on a side panel (for example the right-side panel 114, not shown), and another on the top panel 108 of the luggage case 102. The luggage case 102 may also include an extendable or telescopic tow handle 132 attached to or configured with at least one panel of the luggage case 102, such as to the rear panel 116.

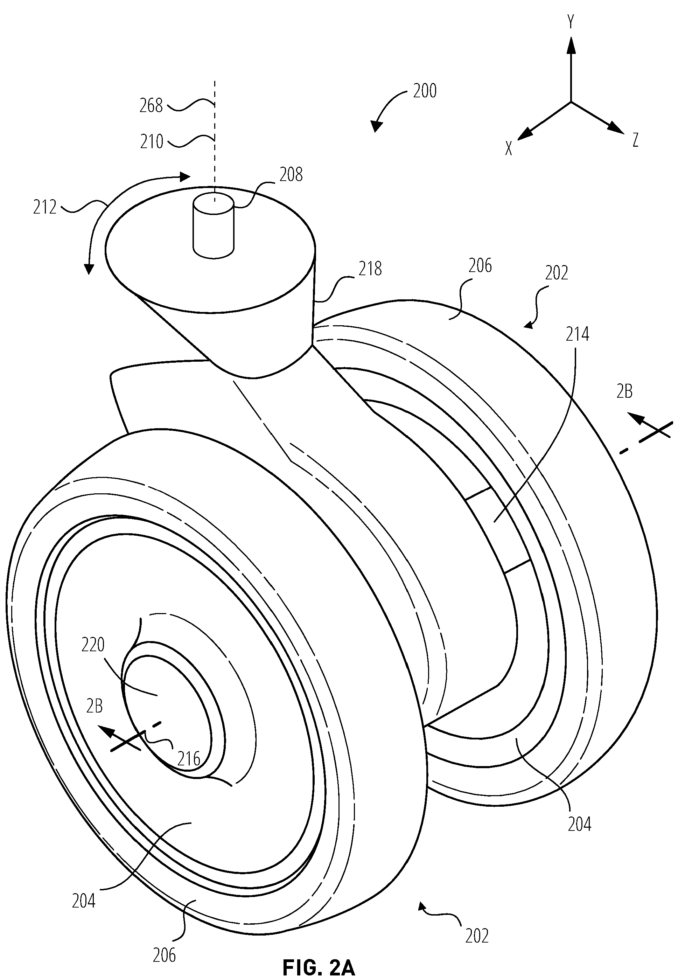

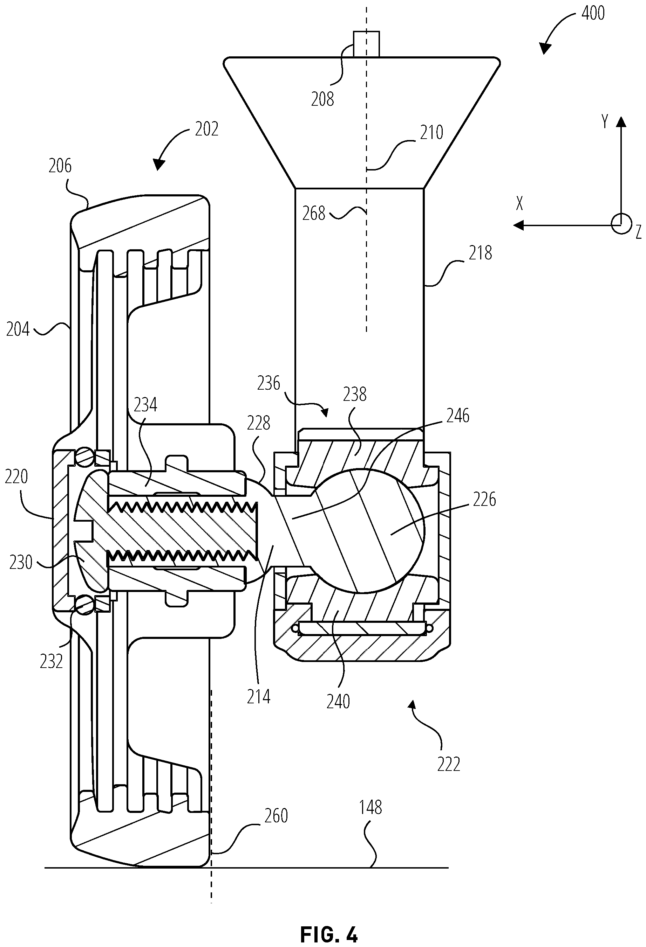

Turning to FIG. 2A - FIG. 2F, an embodiment of a wheel assembly 200 is shown and described. The wheel assembly 200 includes at least one wheel 202. Other embodiments, such as the wheel assembly 400, described with respect to FIG. 4 include only one wheel 202. The figures show a plurality of axes, e.g., x, y, and z axes to aid in the clarity of describing the wheel assemblies and their respective motion herein. The x-axis and z-axis are generally axes that run along respective horizontal directions of the luggage case 102 when the wheel assemblies are in contact with the support surface 148. In some examples, the x-axis and z-axis are substantially parallel to the top panel 108 and/or bottom panel 110. In many embodiments, the x-axis and the z-axis may be orthogonal to one another. The y-axis is an axis that generally runs along a vertical direction of the luggage case 102 when the wheel assemblies are in contact with a support surface 148. In some examples, the y-axis may run along the length dimension of any of the left side panel 112, right side panel 114, rear panel 116, and/or front panel 118. Any combination of axes may form a plane, e.g., an xy plane, xz plane, and/or yz plane. Other planes and axes may be defines as needed and these are described only to aid in understanding of the disclosure.

In many embodiments, the wheel assembly 200 includes a strut, mount, or fork 218 that couples to a portion of the luggage case 102. The strut 218 may couple to the luggage case 102, in one example at a bottom panel 110. The strut 218 may serve as a base or foundation to which other components of the wheel assembly 200 are coupled. The luggage case 102 may include wheel housing 152 at the mounting location to provide adequate structure for the forces applied to the luggage case 102 to be transmitted through the wheels 202.

A second axle 208 defining an axis 210 may be coupled to the strut or fork 218. The strut or fork 218 includes a longitudinal axis 268. The longitudinal axis 268 of the strut 218 may be parallel with the axis 210 in some embodiments. In some embodiments, the longitudinal axis 268 may run with the axis 210. In some embodiments, the longitudinal axis 268 may run in a different direction than the axis 210 (e.g., if the strut is misaligned with a portion of the luggage case 102). The second axle 208 may be in a substantially vertical orientation when the wheels 202 of the wheel assemblies 200 are in contact with the support surface 148. In many embodiments, the axis 210 of the second axle 208 may extend along a longitudinal axis of the luggage case 102. In some examples, the axis 210 may be aligned with, such as for example parallel to, the longitudinal axis 270 of the luggage case 102. In many embodiments, the wheel assembly 200 is mounted to the shell 120 / shell 122 by the second axle 208. The wheel assembly 200 can spin or rotate about a longitudinal axis 210 of the second axle 208. In one example, the second axle 208 is a spinner or mounting axle. The wheel assembly 200 moves around the second axle 208, such as by rotating about the longitudinal axis 210.

At least one wheel 202 is mounted to a first axle 214, which defines an axis 216. In some examples two or more wheels are mounted to the first axle 214. The first axle 214 may be a rotational axle about which the wheels 202 rotate or spin. In some embodiments, the wheels 202 rotate on the first axle 214. In some embodiments, the wheels 202 may be fixed to the first axle 214 and the first axle 214 rotates in its axle mounting (e.g., within the bushing 236). In either case, the wheel or wheels rotate or spin about the axis 216. The first axle 214 may also rotate about the longitudinal axis 210 of the second axle 208. The first axle 214 rotates about the longitudinal axis 210 in a circumferential direction 212 (see, e.g., FIG. 2A). For example, the wheels 202 rotate about the second axle 208 when the direction of motion of the luggage case 102 changes. The spinning of the wheel assembly 200 about the second axle 208 has many benefits, such as allowing the wheels 202 to align the wheels 202 with the direction of travel of the luggage case 102, as well as deflecting around obstacles, etc. The wheel assembly 200 includes a bushing 236 that couples the first axle 214 to the strut 218. In some embodiments, the bushing 236 is at least partially spherical and receives a partially spherical ball 226 to form an at least partially spherical mount 222.

In some embodiments, the wheel 202 can rotate about the first axle 214. For example, the wheel 202 can rotate about the first axle 214 where the first axle 214 does not rotate about its longitudinal axis. In some embodiments, the wheel 202 may be fixed to the first axle 214 and the wheel 202 and first axle 214 together rotate about the longitudinal axis 216 of the first axle 214. In some embodiments, the partially spherical ball 226 may rotate within the bushing 236. In some embodiments, the bushing 234 may rotate with respect to the hub 204. In some embodiments, the bushing 236 may rotate with respect to the strut 218.

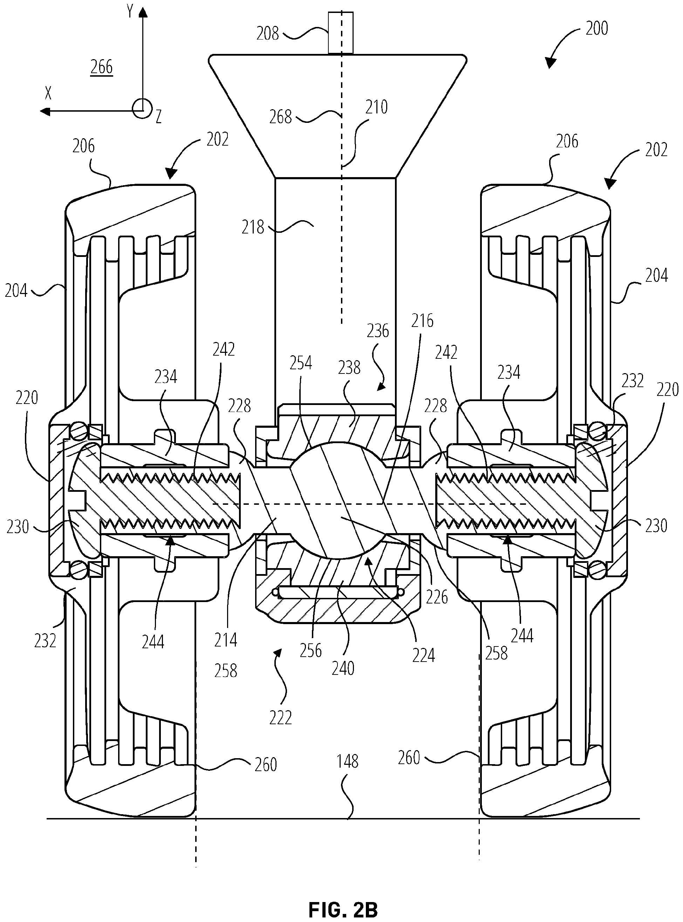

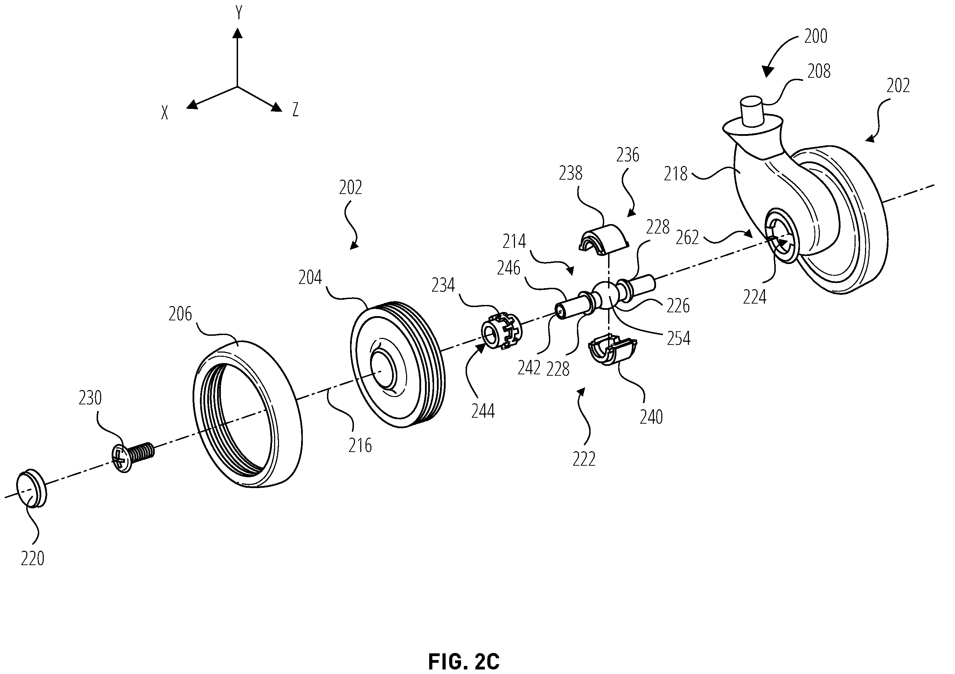

Continuing with FIG. 2B, a cross section of the wheel assembly 200 is shown, taken along line 2B-2B of FIG 2A. FIG. 2B shows an example of the first axle 214 of the wheel assembly 200. Reference is also made to FIG. 2C showing a partially exploded view of the wheel assembly 200, and the first axle 214 in isolation. The first axle 214 includes a shaft 246 that extends along an axis 216 of the first axle 214. The axis 216 is the rotational axis about which the wheels 202 rotate as the luggage case 102 rolls along the support surface 148.

The wheel 202 includes a hub 204. The hub 204 may be fitted or formed with a tire 206. In many embodiments, the hub 204 may be formed of a relatively stiffer and/or stronger material than the tire 206. For example, the hub 204 may be formed of a hard plastic, metal, composite, wood, or the like. The hub 204 may resist deformation as the wheel 202 rotates and makes contact with the support surface 148. In many embodiments, the hub 204 may have a Shore A hardness of about 80-90. In other examples, the hub 204 may have a structure that performs some suspension function when the tire is impacted sharply.

Referring to at least FIG. 2B, the hub 204 may include, or be coupled to, a bushing 234. The bushing 234 includes an aperture 244 therethrough that receives a shaft 246 of the first axle 214. The bushing 234 may include surface feature on an outer surface thereof that aid in coupling the bushing 234 to the hub 204. In some embodiments, the bushing 234 may be formed with the hub 204. In some embodiments, the hub 204 may be formed (e.g., overmolded) on the bushing 234. In some embodiments, the bushing 234 may include a lubricant such as a solid state lubricant or a liquid, paste, or grease-type lubricant. The aperture 244 of the bushing 234 enables the shaft 246 to rotate freely therein and thereby allows the wheels 202 to spin as the luggage case 102 is moved over the support surface 148.

The tire 206 may be formed of a relatively softer material, compared to the hub 204, like natural or synthetic rubber, or the like. For example, the tire 206 may have a Shore A hardness (or durometer) range to ensure durability while providing some level of cushioning as the luggage case 102 rolls over the support surface 148, as well as traction on the support surface 148. In some embodiments, the Shore A hardness values for the tires 206 can range from approximately 55 to 75. Lower hardness values (around 55) indicate softer matinal with better grip and/or cushioning compared to higher values (around 75) for a firmer material. In many embodiments, the tire 206 may be molded over or with the hub 204 (such as overmolded). In other embodiments, the tire 206 may be coupled to the hub 204 after each is formed (e.g., may be fitted over the hub 204). In some embodiments, the hub 204 and tire 206 may be coupled to one another by an adhesive, press fit, or the like.

The wheel assembly 200 includes an at least partially spherical mount 222. In one example, the partially spherical mount 22 is formed by the partially spherical ball 226 and the bushing 236. The partially spherical ball 226, in one example, defines a surface 254 that extends radially from the shaft 246. The 226 may be at least partially spherical. The 226 may have other shapes, such as being partially arcuate, partially cylindrical, partially conical, etc. In the example shown in FIG. 2B, the partially spherical ball 226 is disposed substantially centrally along the length of shaft 246. Tor example, the ball 226 may be centered at a midpoint of the shaft 246. In other examples, such as the wheel assembly 300, the ball 226 may be asymmetrically disposed along the length of the shaft 246. In some embodiments, the ball 226 is mounted on the shaft 246. In one example the ball 226 is symmetrical with the longitudinal axis 216 of the shaft 246.

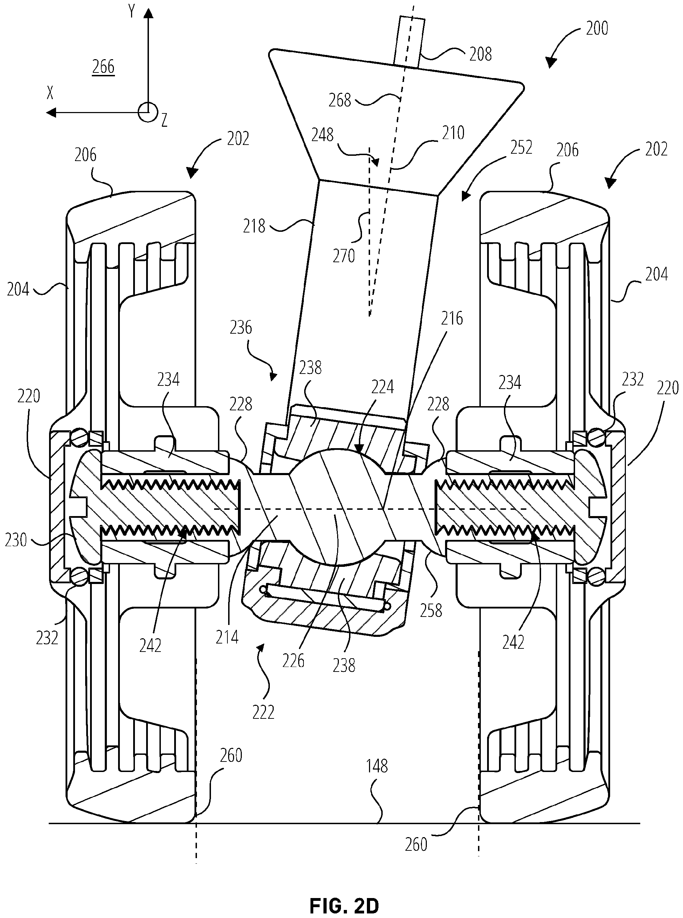

In some embodiments, one or more collars 228 extend outwardly from the shaft 246. The collars 228 may be spaced along the axis 216 a distance from the ball 226. In some embodiments, one or more of the collars 228 may be optional. In one example, the collars 228 may extend radially outwardly from the shaft 246. The collars 228 are limit stops to keep the wheels 202 from pivoting more than is intended about the at least partially spherical mount 222, which is described further herein with respect to FIG. 2D. Generally, more pivoting range of motion of the ball 226 is preferable over less pivoting range of motion to provide better mitigation of obstacle impacts. The collar 228 helps allow for a specified range of motion without the wheels physically interfering with, such as for example the wheel contacting, the strut 218. In some embodiments, the length of the shaft 246 may also be increased to move the wheels 202 further away from one another along the shaft 246 to increase the pivoting range of motion of the ball 226.

In some embodiments, the ball 226 and/or collar 228 may be formed with the shaft 246. For example, the shaft 246 may be formed with the ball 226, and optionally also one or more collars 228 may be machined in a unitary piece. In some embodiments, the partially spherical ball 226 and the one or more collars 228 may be coupled or adhered to the shaft 246. For example, discrete pieces of the collar 228 may be fitted over the shaft 246 and secured with an adhesive, welded, or overmolded on the shaft 246, etc. Other arrangements and methods of forming the ball 226, collar 228, and/or shaft are envisioned within the scope of this disclosure.

The bushing 236 is coupled to the strut 218. The bushing 236 defines a recess 224 that receives the partially spherical ball 226. The bushing 236 may define opposing side openings 262 through which the opposing shafts 246 of the first axle 214 outwardly extend to couple with the wheels 202. The bushing 236 may be formed with the strut 218. In some embodiments, the strut 218 may be formed over (e.g., overmolded) on the bushing 236. In some embodiments, the bushing 236 may be formed of one piece. In some embodiments, such as shown for example in FIG. 2B, the bushing 236 may be formed of two or more portions such as a first portion 238 and a second portion 240. The first portion 238 and second portion 240 may be coupled together to form the recess 224 into which the partially spherical ball 226 is received. In some embodiments, the first portion 238 and second portion 240 are fitted around the partially spherical ball 226, with the partially spherical ball 226 received in the recess 224, and the strut 218 is formed over the combined first axle 214 and bushing 236. In one example, the recess 224 may be defined by a wall 256 forming a partially spherical chamber that corresponds in shape and size to the ball 226. The wall 256 may be continuous, or may include more than one surface arranged and shaped to receive the ball 226 and allow the ball 226 to pivot therein. For example, the wall 256 may be a discontinuous surface formed by one or more partially curved portions or ribs. The portions may together form a discontinuous curved or partially spherical surface. For example, the ribs may form a partially spherical cage that receives the ball 226.

The shaft 246 of the first axle 214 may include one or more receptacles 242 formed in respective ends thereof. The receptacles 242 may be threaded such that the receptacles 242 can accept respective complementary threaded fasteners 230 or other suitable fasteners such as roll pins, rivets, dowels, or the like that couple the wheels 202 to the first axle 214.

To assemble the wheel assembly 200, the first axle 214 may be coupled with the bushing 236. In some embodiments, the first axle 214 may be coupled to the first portion 238 and second portion 240 of the bushing 236. The first portion 238 and the second portion 240 may be coupled to together before being coupled to the strut 218. The first portion 238 and the second portion 240 may be coupled together with the strut 218 (e.g., with overmolding). The strut 218 may be formed over the assembled bushing 236 and first axle 214. In a separate operation, the bushing 234 may be coupled with the hub 204. The hub 204 may be coupled to the tire 206. Any of these processes or coupling steps may be as described herein, e.g., with adhesives, overmolding, co-molding, integral forming, etc. The assembled wheels 202 may be coupled with the shafts 246, e.g., by placing the shafts 246 into the respective apertures 244 of the bushings 234. The fasteners 230 may be inserted into the receptacles 242, e.g., by threading, etc. to secure the wheel 202 to its respective shaft 246 section. A seal 232 and/or cap 220 may be placed over the fastener 230 for aesthetic reasons and/or to keep contaminants out of the bushing 234 / shaft 246 interface, to promote easy rolling of the luggage case 102 over the support surface 148. The second axle 208 may be formed with or coupled to the strut 218, and the wheel assembly 200 coupled to the luggage case 102.

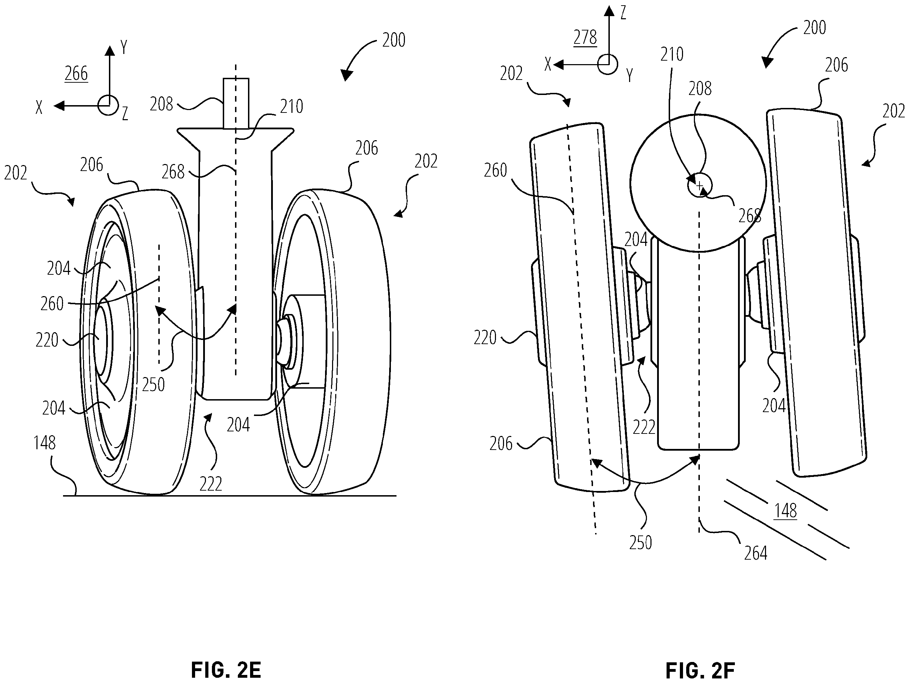

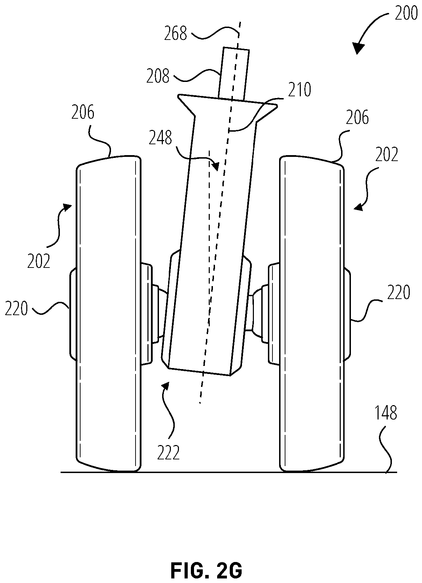

With respect to FIGS. 2D-2G, the wheels 202 may move in a first plane 266 (e.g., vertical movement or movement in an xy plane shown for example in FIGS. 2D and 2G). The wheels 202 may move in a second plane 278 (e.g., a horizontal movement or movement in an xz plane, shown for example in FIGS. 2E ad 2F). The wheels 202 may also move in both the first plane 266 and the second plane 278.

Turning to FIG. 2D and FIG. 2G, the wheel assembly 200 is shown in a configuration with the at least partially spherical mount 222 pivoted in a first plane 266. In this example the wheel assembly 200 is pivoted at an angle 248 with respect to the longitudinal axis 268 of the strut or mount 218 (e.g., a vertical angle). In various embodiments, the angle 248 may be in an inclusive range between about 5° and 10°. For example, the angle may be 5°, 6°, 7°, 8°, 9°, 10°, or values therebetween. In some embodiments, the angle 248 may be less than 5° or more than 10°. The value of the angle 248 may be limited by the collar 228 as described herein. For example, as shown in FIG. 2D, the strut 218 and the first axle 214 on which the wheels 202 are mounted may pivot with respect to one another in the xy plane. The pivoting action may cause the plane in which the wheels 202 rotate about the axis 216 (e.g., the yz plane or the plane defined by the wheels 202) to pivot about the z-axis with respect to the longitudinal axis 268 of the strut 218. The wheels 202, first axle 214, and/or least partially spherical mount 222 may pivot at the angle 248 with respect to the axis 268 defined by the strut 218, the housing 152 or any of the panels of the luggage case 102. The angle 248 may be defined as an angle between the longitudinal axis 268 of the strut 218 and any orthogonal line or line segment extending between the support surface 148 and the top panel 108 when the wheels 202 are in contact with the support surface 148, such as the longitudinal axis 270 of the luggage case 102. Similarly, the angle 248 may be defined as an angle between the longitudinal axis 216 of the first axle 214 and any orthogonal line running between any of two of the left side panel 112, the right side panel 114 (e.g., the transverse axis 272 of the luggage case 102), or the rear panel 116, and/or the front panel 118 (e.g., the depth axis 174 of the luggage case 102). Similarly, the angle 248 may be defined by any orthogonal line running through either of the top panel 108 or bottom panel 110 (e.g., the depth axis 274 or the transverse axis 272 of the luggage case 102). Such pivoting action may be referred to as vertical pivoting.

Such a configuration may be encountered, such as when a luggage case 102 has an expandable gusset 150 in an expanded configuration such that the shell 120 loses some of its rigidity. Such situations can be exacerbated by heavy loads of objects within a luggage article, with or without an expansion function. In such situations a portion of the shell, such as for one example, the bottom panel 110 may deflect outwardly, which is downwardly toward the support surface. This may cause the longitudinal axis 210 to move off of a vertical position and create the vertical pivoting, which may result in the vertical angle 248 above. In such situations, the at least partially spherical mount 222 allows the partially spherical ball 226 to pivot within the recess 224. The wheels 202 and first axle 214 move with the ball 226, and pivot with respect to the longitudinal axis 210, and thus also with the strut 218, enabling the wheels 202 to remain in contact with the support surface 148. Without the pivoting action of the wheel assembly 200, one or more wheels 202 may lift off the support surface 148 and create undesirable stress in the shell 120 / shell 122. Such wheel lift may also cause problems steering the luggage case 102.

Also shown for example in FIG. 2D, the collar 228 (in this example the collar 228 on the right side of the first axle 214) limits the pivoting range of motion of the wheels 202 with respect to the strut 218. The collar 228 defines an engagement surface 258 that engages a portion of the strut 218 to limit pivoting of the first axle 214. In some embodiments, the engagement surface 258 is a rounded or domed surface. In some embodiments, the engagement surface 258 may be partially spherical. In some embodiments, the engagement surface 258 may be an angular fillet. In some embodiments, the engagement surface 258 may be a step or shoulder. By limiting the range of motion, the collar may reduce or eliminate the likelihood that the wheel 202 will contact the strut 218 or luggage case 102. The collar 228 engages a portion of the strut 218 such that a clearance 252 remains between the wheel 202 (particularly the tire 206) and the strut 218. For example, the portion of the strut 218 contacted may be a rim or edge of the recess 224 through which the first axle 214 extends from the bushing 236. In many embodiments, the strut 218 covers the bushing 236. In some embodiments, the strut 218 may not cover the bushing 236. The pivot limit action of the collar 228 prevents the strut 218 from interfering with the rotation of the wheel 202 about the axis 216.

Turning to FIG. 2E the wheel assembly 200 is shown in a configuration with the at least partially spherical mount 222 pivoted at an angle 250 with respect to the longitudinal axis 268 of the strut 218. Alternately or additionally, the mount 222 may pivot with respect to longitudinal axis 210 of the second axle 208 (e.g., a horizontal angle). In various embodiments, the angle 250 may be in an inclusive range between about 5° and 10°. For example, the angle may be 5°, 6°, 7°, 8°, 9°, 10°, or values therebetween. In some embodiments, the angle 250 may be less than 5° or more than 10°. The value of the angle 250 may be limited by the collar 228 as described herein. For example, as shown in FIG. 2E, the strut 218 and the wheels 202 may pivot with respect to one another in the xz plane. The pivoting action may cause the plane in which the wheels 202 rotate about the axis 216 (e.g., the yz plane or the plane 260 defined by the wheels 202) to pivot with respect to a second plane defined by the longitudinal axis 268 of the strut 218. Alternately or additionally, the wheels 202 may pivot with respect to longitudinal axis 210 of the second axle 208. For example, the second plane may be normal to the longitudinal axis 268 of the strut 218 and the wheels 202 may pivot about the longitudinal axis 268. The wheels 202, first axle 214, and/or least partially spherical mount 222 may pivot at the angle 250 with respect to the strut 218, the housing 152 or any of the panels of the luggage case 102. The angle 250 may be defined as an angle between a line 264 orthogonal to the axis 268 of the strut 218 (see, e.g., FIG. 2F) and orthogonal any line or line segment extending within the plane 260 defined by one or more of the wheels 202. Similarly, the angle 250 may be defined as an angle between any line running with the plane 260 and any orthogonal line running between any of two of the left side panel 112, the right side panel 114 (e.g., the transverse axis 272 of the luggage case 102), or the rear panel 116, and/or the front panel 118 (e.g., the depth axis 174 of the luggage case 102). Similarly, the angle 250 may be defined as an angle between any orthogonal line running with the plane 260 and any orthogonal line running through either of the top panel 108 or bottom panel 110, such as the longitudinal axis 270 of the luggage case 102. Such pivoting action may be referred to as horizontal pivoting.

Such configurations may be encountered when a wheel 202 of the wheel assembly 200 encounters an obstacle. The obstacle may inhibit forward motion of the wheel 202. The inhibited wheel may pivot in a rearward direction about the longitudinal axis 210 with respect to the motion of the luggage case 102 and thereby pass around the obstacle without substantially inhibiting the forward motion of the luggage case 102.

The wheels 202 may pivot, as shown for example in FIGS. 2D-2G, when the luggage case 102 is wheeled over uneven or rough surfaces. Such surfaces cause the wheels 202 to deflect and change the direction of the motion of the luggage case 102 from its intended direction. The pivoting action of the wheels 202 and first axle 214 can help the wheels 202 track appropriately over uneven or rough surfaces. For example, if the wheel 202 encounters an obstacle such as a bump, depression, rock, rough surface, or other object that impedes its path, the at least a portion of the wheel assembly 200 such as a wheel 202 and/or first axle 214 may first move in a first plane 278 (e.g., an xz plane), such as for example by moving (e.g., pivoting) horizontally (e.g., as shown in FIG. 2E and 2F), reducing force transferred to a housing 152 or other structure of the wheel assembly 200 and/or luggage case 102. A portion of the wheel assembly 200, such as a wheel 202 and/or the first axle 214 may also be subject to movement in a second plane, such as for example by a vertical movement of the wheel 202 (e.g., as shown in FIGS. 2D and 2G) as the wheel 202 clears the obstacle (e.g., movement in a second plane 266 or xy plane). Together the movement in the first plane 278 and second plane 266, such as the horizontal and/or vertical movements described here help minimize the forces on the luggage case 102 and enable smoother movement of the wheel assemblies 200 and luggage case 102 over a support surface 148 compared to existing wheel assemblies.

Additionally, or alternately, the pivoting motion of the wheels 202 may help address poorly aligned or misaligned wheels 202 and/or wheel assemblies 200. For example, if the lower corner region 126 of the luggage case 102 were to become damaged or bent in use, a prior wheel assembly could lose contact with the support surface 148. The wheel assemblies disclosed herein can compensate for such misalignment or damage by pivoting to maintain contact with the support surface 148.

The wheel assembly 200 can pivot vertically, horizontally, and/or some combination thereof. For example, combining the configurations of FIG. 2E, FIG. 2F, and FIG. 2G, the wheels 202 may simultaneously pivot both vertically and horizontally with respect to the strut 218. See, for example FIG. 2E and FIG. 2F, showing the wheels 202 pivoting horizontally with respect to the longitudinal axis 268 of the strut 218. As shown for example in FIG. 2G, the wheels 202 can pivot with respect to the longitudinal axis 268 of the strut 218 in a vertical direction. Such a situation shown in FIG. 2F may arise when the shells 120 / 122 of the luggage case 102 flex with respect to one another, or downward toward the support surface 148. The pivoting motion of the wheels 202 help the wheels 202 maintain contact with the support surface 148. The maintenance of contact between the wheels 202 and the support surface 148 may reduce stress in components of the luggage case 102. The maintenance of contact between the wheels 202 and the support surface 148 may prevent problems steering the luggage case 102.

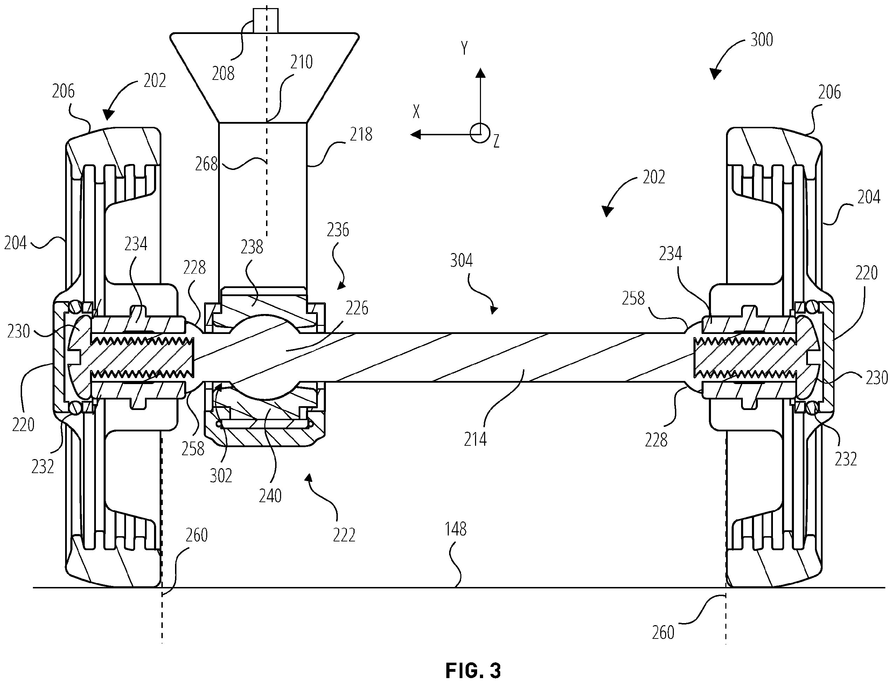

FIG. 3 shows an embodiment of a wheel assembly 300 which is similar to the wheel assembly 200 in many aspects. For example, the wheel assembly 300 includes a second axle 208, a first axle 214, an at least partially spherical mount 222, coupling between the strut 218 and the bushing 236, and a pair of wheels 202. Where the wheel assembly 300 differs from the wheel assembly 200 is that the partially spherical ball 226 is asymmetrically disposed along the length of the first axle 214. For example, the first axle 214 in this embodiment includes a first shaft portion 302 and a second shaft portion 304 with the partially spherical ball 226 disposed therebetween. The second shaft portion 304 may be a different length than the first shaft portion 302. An advantage of the wheel assembly 300 may be to increase stability of the luggage case 102, and/or to increase torque of an obstacle on a wheel 202 and thereby increase the amount that the first axle 214 pivots with respect to the longitudinal axis 210 to clear the obstacle. Another benefit may be that the second shaft portion 304 can accommodate greater flexion of the shell 120 than the wheel assembly 200.

In some embodiments, the wheel assembly 400 enables the wheel 202 to pivot in two planes with respect to the longitudinal axis 210. For example, the wheel 202 may pivot horizontally with respect to the longitudinal axis 210 (e.g., in the xz plane or the plane 260 defined by the wheels 202). In another example, the wheel 202 may pivot vertically with respect to the longitudinal axis 210 (e.g., in the xy plane). The wheel assembly 400 can pivot vertically, horizontally, and/or some combination thereof.

In some examples, the wheel assembly 400 pivots vertically. For example, the ball 226 may have a shape other than partially spherical (e.g., partly cylindrical) that enables the wheel 202 to pivot in the vertical (e.g., xy) plane. Such a ball 226 shape and corresponding bushing surface enable the benefit of keeping the wheels on the ground due to shell 120 / 122 deflection.

In some embodiments, the wheel assembly 400 pivots horizontally. In some examples, the wheel assembly 400 pivots both vertically and horizontally. In some embodiments, the wheel assembly 400 pivots vertically and horizontally at the same time.

The pivoting action of the wheel 202 may help maintain contact of the wheel 202 with the support surface 148. The maintenance of contact may be beneficial when the shell 120 / 122 flexes. The maintenance of contact may be beneficial while avoiding obstacles or while steering the luggage case 102.

FIG. 4 shows an embodiment of a wheel assembly 400 which is similar to the wheel assembly 200 in many aspects. For example, the wheel assembly 400 includes a second axle 208, a first axle 214, coupling between the strut 218 and the bushing 236, and an at least partially spherical mount 222. Where the wheel assembly 300 differs from the wheel assembly 200 is that the wheel assembly 400 includes only one wheel 202. In the example shown, the wheel 202 is cantilevered with respect to the strut. In other embodiments, the single wheel 202 may be centrally mounted with the strut. Benefits of the wheel assembly 400 include lighter weight and more maneuverability with respect to the wheel assembly 200 and wheel assembly 300.

As with the wheel assembly 200, the structural rigidity created by the engagement of the engagement surface 258 of the collar 228 with the bushing 236 edge around the first axle 214 shaft 246 limits travel of the wheel 202. This engagement helps prevent the wheel 202 from contacting the strut 218.

The description of certain embodiments included herein is merely exemplary in nature and is in no way intended to limit the scope of the disclosure or its applications or uses. In the included detailed description of embodiments of the present systems and methods, reference is made to the accompanying drawings which form a part hereof, and which are shown by way of illustration specific to embodiments in which the described systems and methods may be practiced. These embodiments are described in sufficient detail to enable those skilled in the art to practice presently disclosed systems and methods, and it is to be understood that other embodiments may be utilized, and that structural and logical changes may be made without departing from the spirit and scope of the disclosure. Moreover, for the purpose of clarity, detailed descriptions of certain features will not be discussed when they would be apparent to those with skill in the art so as not to obscure the description of embodiments of the disclosure. The included detailed description is therefore not to be taken in a limiting sense, and the scope of the disclosure is defined only by the appended claims.

From the foregoing it will be appreciated that, although specific embodiments of the invention have been described herein for purposes of illustration, various modifications may be made without deviating from the spirit and scope of the invention.

As used herein and unless otherwise indicated, the terms "a" and "an" are taken to mean "one," "at least one" or "one or more." Unless otherwise required by context, singular terms used herein shall include pluralities and plural terms shall include the singular.

Unless the context clearly requires otherwise, throughout the description and the claims, the words 'comprise,' 'comprising,' and the like are to be construed in an inclusive sense as opposed to an exclusive or exhaustive sense; that is to say, in the sense of "including, but not limited to." Words using the singular or plural number also include the plural and singular number, respectively. Additionally, the words "herein," "above," and "below" and words of similar import, when used in this application, shall refer to this application as a whole and not to any particular portions of the application.

All relative, directional, and ordinal references (including top, bottom, side, front, rear, first, second, third, and so forth) are given by way of example to aid the reader's understanding of the examples described herein. They should not be read to be requirements or limitations, particularly as to the position, orientation, or use unless specifically set forth in the claims. Connection references (e.g., attached, coupled, connected, joined, and the like) are to be construed broadly and may include intermediate members between a connection of elements and relative movement between elements. As such, connection references do not necessarily infer that two elements are directly connected and in fixed relation to each other, unless specifically set forth in the claims.

## Claims

1. A luggage wheel assembly (200, 300, 400) comprising:
a strut (218); and
a wheel (202) defining a wheel plane (260);
a first axle (214) coupled to the wheel (202) and coupled to the strut (218), wherein the wheel (202) rotates within the wheel plane (260) and pivots with respect to the strut (218).

2. The luggage wheel assembly (200, 300, 400) of claim 1, further comprising an at least partially spherical ball joint (222) coupled to the strut (218) and the first axle (214) and the wheel (202) pivots with respect to the strut (218) via the at least partially spherical ball joint (222).

3. The luggage wheel assembly (200, 300, 400) of any of claims 1 or 2, further comprising a second axle (208) coupled to the strut (218), wherein the first axle (214) is pivotable with respect to the second axle (208).

4. The luggage wheel assembly (200, 300, 400) of any preceding claim, wherein the wheel (202) is offset from, and pivotable with respect to, the strut (218).

5. The luggage wheel assembly (200, 300, 400) of any preceding claim, wherein the wheel plane (260) pivots in a first plane (266), a second plane (278), or a combination of the first (266) and second (278) planes.

6. The luggage wheel assembly (200, 300, 400) of any preceding claim, wherein the wheel plane (260) pivots at an angle with respect to an axis (268) of the strut (218).

7. The luggage wheel assembly (200, 300, 400) of any preceding claim, wherein the wheel plane (260) pivots with respect to a second plane defined by an axis (268) of the strut (218).

8. The luggage wheel assembly (200, 300, 400) of claim 7, wherein the second plane is substantially normal to the axis (268) of the strut (218).

9. The luggage wheel assembly (200, 300, 400) of any preceding claim, further comprising a collar (228) extending radially from the first axle (214) that limits pivoting of the wheel plane (260) to prevent a hub (204) of the wheel (202) from contacting the strut (218).

10. The luggage wheel assembly (200, 300, 400) of any preceding claim, further comprising a second wheel (202), wherein the first wheel (202) and the second wheel (202) are mounted to the first axle (214) to rotate about axis (216) defined by the first axle (214).

11. The luggage wheel assembly (200, 300, 400) of any preceding claim, wherein the wheel assembly (200, 300, 400) comprises a spinner wheel assembly (200, 300, 400).

12. The luggage wheel assembly (200, 300, 400) of any preceding claim, wherein the at least partially spherical ball joint (222) comprises:
a partial sphere (226) formed with the first axle (214); and
a bearing (236) including a partially spherical recess (224), wherein the partial sphere (226) is receivable in the recess (224).

13. The luggage wheel assembly (200, 300, 400) of claim 12, wherein the strut (218) is molded onto the bearing (236).

14. The luggage wheel assembly (200, 300, 400) of any preceding claim, wherein the wheel (202) pivots in an inclusive range between 5° and 10°.

15. A luggage case comprising the luggage wheel assembly of any of the preceding claims.
